# EUROPEAN PATENT SPECIFICATION

(11) **EP 2 799 287 B1**
(45) Date of publication and mention of the grant of the patent: **24.04.2024**
(21) Application number: 14161860.3
(22) Date of filing: 26.03.2014
(51) Int. Cl.: F21V 9/00, B64D 25/00, F21K 2/00, A62B 3/00, B64D 47/02, G08B 7/06

(54) **EMERGENCY LIGHTING**
NOTBELEUCHTUNG
ÉCLAIRAGE D'URGENCE

(30) Priority: 28.03.2013 GB 201305803
(43) Date of publication of application: 05.11.2014
(73) Proprietor: Saf-t-Glo Limited, Cwmbran, Wales NP44 3AB (GB)
(72) Inventor: O'Kell, Sean, Swaffham, Norfolk PE37 7XD (GB)
(74) Representative: Barker Brettell LLP

(56) References cited:
- GB-A- 2 448 424
- GB-B- 2 448 424
- US-A1- 2002 015 309
- US-A1- 2010 149 825
- US-A1- 2010 285 284
- US-A1- 2011 049 756

## Description

This invention concerns improvements in or relating to emergency lighting and in particular, but not exclusively, to emergency lighting used to indicate a path leading to an exit for evacuation of passenger vehicles or ships in an emergency, for example following an accident or outbreak of a fire.

The invention has particular application to passenger vehicles of the type in which rows of seats are provided on either side of an aisle with an exit at one or both ends of the aisle and/or on one or both sides of the aisle between the ends. Examples of this type of passenger vehicle include aircraft, trains, buses and coaches.

An emergency lighting system for use in an aircraft is described in our UK Patent No.2 314 536 in which a pathway to the exit(s) is illuminated by photoluminescent material extending along the aisle for passengers to follow to the exit(s).

When exposed to a light source, the photoluminescent material is activated and provides a low level light source that is normally invisible in daylight but is visible under conditions of darkness or low illumination from other light sources, for example where smoke from a fire blocks the overhead lights that normally illuminate the passenger cabin.

The level of illumination provided by the photoluminescent material under these conditions is sufficient to guide passengers to an exit to evacuate the aircraft and avoids the problems associated with electrically powered systems that are prone to failure at the time they are required, for example due to damage to the wiring supplying power to the system.

The pathway may comprise photoluminescent guides of pre-determined length, for example 1 or 2 metre lengths, laid end to end along the aisle to provide a substantially continuous path of light when illuminated.

Employing guides of pre-determined length facilitates manufacture, storage, transportation, handling and installation of the guides. It can happen however that the pathway is not a multiple of the pre-determined guide lengths with the result that one or more guides has to be shortened during installation.

This involves cutting the guide and, where the guide is sealed to prevent ingress of liquids and dirt, re-sealing the cut-end of the guide.

The photoluminescent material is usually provided by an insert received within a housing of light transmitting material. A common photoluminescent material is strontium aluminate and may include a dopant to enhance the photoluminescent properties.

Strontium aluminate has a pale yellow colour and, in GB2448424B, we have previously proposed placing a coloured film of sheet plastics in the housing above the insert to adapt the colour of the guide to match the surroundings.

The film of sheet plastics is separate from the insert and this can lead to problems when a guide is cut to length. The film of sheet plastics is normally wrapped around the ends of the insert during manufacture to prevent the film wrinkling which may have an adverse effect on the visual appearance of the guide.

As a consequence, when a section of guide is cut to length, the film of sheet plastics can no longer be wrapped around the cut end of the insert with the result that the film may become wrinkled and/or not cover the entire length of the insert.

The present invention seeks to address the problems afore-mentioned and provide further improvements to photoluminescent emergency lighting systems for passenger vehicles and in particular for aircraft.

More especially, a desired aim of the present invention is to provide a photoluminescent guide for an emergency lighting system as well as an emergency lighting system employing the guide that overcomes or mitigates one or more of the problems and disadvantages afore-mentioned.

Another desired aim of the present invention is to provide a photoluminescent insert for an emergency lighting system as well as a photoluminescent lighting system employing the insert.

Yet another desired aim of the present invention is to provide a method of installing an emergency lighting system employing the photoluminescent guide and/or photoluminescent insert.

GB 2,448,424 B discloses a photoluminescent track for an emergency lighting system which comprises an elongate holder and an elongate photoluminescent insert received in a channel extending lengthwise of the holder. The insert is a push-fit in the channel and is retained by engagement of opposed inwardly directed lips at the mouth of the channel with the upper side edges of the insert so that the upper surface of the insert is exposed within the opening. A film (which may be coloured) may be positioned over the photoluminescent insert, within the housing. The track may be recessed in a floor and be used to mark emergency exit routes in aircraft, other vehicles or buildings.

According to one aspect of the invention, there is provided a photoluminescent guide for an emergency lighting system as defined in claim 1. Optional features are the subject of claims 2 to 9.

The insert may be flexible, for example the insert may comprise a tape or ribbon, Alternatively, the insert may be rigid, for example the insert may comprise a strip.

The housing may be an extrusion or moulding with a longitudinal slot in which the insert is received. The slot may be open at one or both ends and the insert sealed within the housing by closing the or each open end.

The or each open end may be closed by a cap or film positioned across the open end and sealed. Alternatively, the or each open end may be closed by applying adhesive or mastic to the open end.

The light transmitting film of the cap element may be coloured to match or contrast with the colour of an adjacent surface on which the guide is positioned in use.

The guide may be attached directly to the surface or indirectly, for example the guide may be located, preferably releasably, in a holder attached to the surface.

The guide may be straight or curved or bent or have any other shape.

A plurality of guides may be arranged to define a pathway in an emergency lighting system capable indicating a route to an exit in an emergency for evacuating an area.

The pathway may include at least one linear section. The pathway may include at least one non-linear section. The linear section may comprise one or more guides that are straight. The non-linear section may comprise one or more guides that are curved or bent or any other shape. Curved guides may have a constant radius of curvature or a variable radius of curvature.

The guide may be employed in an emergency lighting system for a passenger vehicle. The guide may be employed in an emergency lighting system for an aircraft. The emergency lighting system can be adapted to any configuration of pathway. Straight, curved, bent or any other shape of guide may be employed separately or in any combination to adapt the emergency lighting system to the layout of the vehicle.

According to another aspect of the invention we provide a method of installing an emergency lighting system as defined in claim 10. Optional features are the subject of claims 11 and 12.

The emergency lighting system may be employed in a vehicle for guiding passengers to an exit in darkness or low ambient light. The system may be configured to provide a pathway for guiding passengers to the exit.

The pathway may comprise a plurality of guides. The guides may be laid end to end. The guides may be of pre-determined length shorter than the length of the pathway.

The pathway may include at least one linear section. The pathway may include at least one non-linear section. The linear section may comprise one or more guides that are straight. The non-linear section may comprise one or more guides that are curved or bent or any other shape. Curved guides may have a constant radius of curvature or a variable radius of curvature.

The emergency lighting system can be adapted to any configuration of pathway. Straight, curved, bent or any other shape of guide may be employed separately or in any combination to adapt the emergency lighting system to the layout of the vehicle.

According to another aspect of the invention we provide a method of installing an emergency lighting system as defined in claim 13. Optional features are the subject of claims 14 and 15.

The pathway may include at least one linear section. The pathway may include at least one non-linear section. The linear section may comprise one or more guides that are straight. The non-linear section may comprise one or more guides that are curved or bent or any other shape. Curved guides may have a constant radius of curvature or a variable radius of curvature.

Straight, curved, bent or any other shape of guide may be employed separately or in any combination to adapt the emergency lighting system to any configuration of pathway. Where the emergency lighting system is installed in a vehicle such as an aircraft, the system can be adapted to the layout of the vehicle.

The method may include cutting one or more guides to length and re-sealing the insert within the housing.

The guide and insert may be in accordance with preceding aspects of the invention.

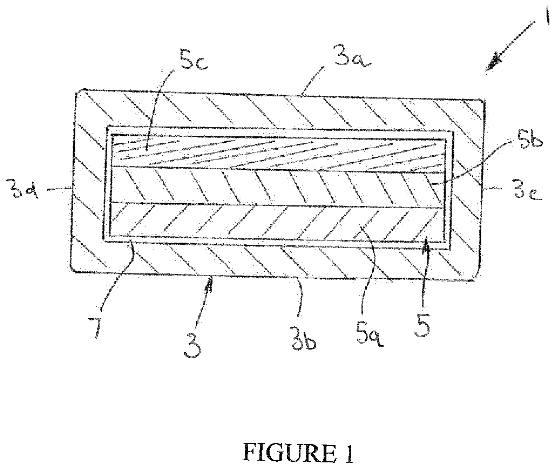

These and other features benefits and advantages of the invention according to the various aspects will be apparent from the following description of exemplary embodiments with reference to the accompanying drawing in which Figure 1 is a cross-section of a photoluminescent guide for an emergency lighting system embodying the invention.

Referring to the accompanying drawing, a photoluminescent guide 1 for an emergency lighting system for use, for example, in a passenger vehicle such as an aircraft, train, bus or coach is shown. The emergency lighting system is configured to guide passengers from a seating area of the vehicle to an exit in an emergency under conditions of darkness or low levels of ambient light.

The system may be configured to define a pathway leading to an exit along which passengers can move to access the exit when evacuating the vehicle. The pathway may lead to more than one exit depending on the size and layout of the vehicle.

In an aircraft, the pathway may be defined between rows of seats on either side of an aisle within a cabin to guide passengers along the aisle to exits at the front and/or rear and/or centre of the aircraft.

In aircraft having more than one level or deck connected by a stairway, the pathway may be defined between the sides of the stairway with additional photoluminescent markers being provided at the ends and/or along the nose of individual steps to assist passengers to negotiate the stairway in an emergency requiring passengers to move from one level or deck to another to evacuate the aircraft.

The above description is provided by way of example only and the invention is not limited to systems configured in this manner.

The system preferably comprises a plurality of photoluminescent guides 1. The guides 1 may be laid end to end along the pathway. The guides 1 may be arranged along one or both sides of the pathway. The pathway may include at least one linear section. The pathway may include at least one non-linear section.

The linear section may comprise one or more guides that are straight. The non-linear section may comprise one or more guides that are curved or any other shape. Curved guides may have a constant radius of curvature or a variable radius of curvature.

Each guide 1 includes an outer housing 3 and a photoluminescent insert 5 received within the housing 3. In this embodiment, the housing 3 is an extrusion or moulding of a light transmitting material, for example plastics such as polycarbonate.

The housing 3 is preferably capable of withstanding forces and loads from people standing on the guide 1 and/or from cases or equipment such as trolleys passing over the guide 1 when installed along the floor of a vehicle.

The housing 3 is preferably substantially rectangular in cross-section with opposed main walls 3a, 3b and opposed side walls 3c, 3d defining a central slot 7 extending longitudinally from one end of the housing 3 to the other end.

In another embodiment (not shown), the housing 3 may comprise an upper part and a lower part joined along the opposed side walls 3c, 3d. The upper and lower parts may be joined together releasably, for example by interengageable formations. Alternatively, the upper and lower parts may be joined together permanently, for example by adhesive or welding. Both the upper part and lower part may be made of light transmitting material as aforementioned. Alternatively, the upper part may be made of light transmitting material and the lower part may be made of a material that is opaque or otherwise does not transmit light.

The insert 5 is received in the slot 7 and extends from one end of the slot 7 to the other end and from one side of the slot 7 to the other side. The ends of the slot 7 are closed by applying adhesive or mastic (not shown) to the ends of the housing to seal the insert 5 within the slot 7. In this way ingress of liquids or dirt to the slot 7 which could have an adverse effect on the appearance and operation of the insert 5 may be prevented.

The insert 5 essentially comprises three elements, a base element 5a, a photoluminescent element 5b and a cap element 5c. These are shown having equal thickness that is exaggerated for the purposes of clarity and it will be understood that in practice they may be of different thickness and may be considerably thinner.

The base element 5a may comprise a polymeric material such as polycarbonate or polyester. Alternatively, the base element 5a may comprise a metal or alloy such as aluminium. The photoluminescent element 5b preferably comprises one or more layers of a polymeric material with one or more of the layers containing a photoluminescent material. The or each layer may be a vinyl layer and the photoluminescent material may be strontium aluminate preferably containing a dopant to enhance the photoluminescent properties. The photoluminescent element 5b may include other materials in one or more layers to provide desired properties. The cap element 5c preferably comprises a coloured film of sheet plastics such as polyester.

The coloured film may be chosen to match the colour of the surroundings in which the guide 1 is positioned in use, for example when mounted on a carpeted floor, the film may match the colour of the carpet.

The colour may be chosen to maximise the light reaching the photoluminescent element 5b for charging the photoluminescent material by exposure to natural or artificial light sources and/or for minimising the reduction in light emission from the photoluminescent material for illumination in darkness or low levels of ambient light.

The materials and thickness of the elements 5a, 5b, 5c forming the insert 5 may be chosen so that the insert 5 is configured to be relatively flexible.

The insert 5 may be cut to length from a flexible tape or ribbon that can be wrapped or wound in a roll for storage. Alternatively, the materials and thickness of one or more of the elements 5a, 5b, 5c forming the insert may be chosen so that the insert is configured to be substantially rigid. The insert 5 may be cut to length from a rigid strip.

The base element 5a, photoluminescent element 5b and cap element 5c are preferably secured together to form an integral, one-piece composite insert 5 for location within the slot 7.

The base element 5a may be an extrusion or moulding. The photoluminescent element 5b may be applied to the base element 5a as a coating or extrusion in one or more layers. The base element 5a and photoluminescent element 5b may be a co-extrusion. The cap element 5c may be secured to the photoluminescent element 5b by adhesive or any other suitable means such as a light transmitting double sided tape.

The insert 5 extends between the sides 3c, 3d of the housing 3 and between the ends of the housing 3. In this way light is emitted over substantially the entire area of the main wall 3a which, in use is uppermost, when the guide 1 is installed on a surface such as a floor by any suitable means.

In one arrangement, the lower main wall 3b may be attached directly to the surface, for example by adhesive. In another arrangement, the guide 1 may be releasably mounted in a channel of a holder secured to the floor as described in our UK Patent No.2448424B.

The guides 1 are preferably of pre-determined length, for example 1 or 2 metre lengths, sealed at the ends for laying end to end to provide a substantially continuous path of light when illuminated. It may be that when installing the guides 1, one or more of the guides requires cutting to shorten the length of the guide 1 to fit the pathway.

By attaching the elements 5a, 5b, 5c of the insert to each other to form an integral, one-piece composite insert, the guide 1 can be cut without any adverse effect on the appearance of the insert 5 when the guide 1 is resealed to fit the pathway. In particular the problems of the prior art arrangement with the coloured film wrinkling when cutting the guide are avoided.

In a modification (not shown), the integral, one-piece composite insert 5 may comprise the photoluminescent element 5b and the cap element 5c, i.e. the base element 5a may be omitted. In this arrangement the material and thickness of the photoluminescent element 5b may be chosen so that the insert is configured to be flexible or rigid.

As utilized herein, the terms "relatively," "substantially", and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the invention as recited in the appended claims.

It should be noted that the term "exemplary" as used herein to describe various embodiments is intended to indicate that such embodiments are possible examples, representations, and/or illustrations of possible embodiments (and such term is not intended to connote that such embodiments are necessarily extraordinary or superlative examples).

References herein to the positions of elements (e.g., "top," "bottom," "above," "below," etc.) are merely used to describe the orientation of various elements in the FIGURES. It should be noted that the orientation of various elements may differ according to other exemplary embodiments, and that such variations are intended to be encompassed by the present disclosure.

It is important to note that the construction and arrangement of the photoluminescent guide as shown in the exemplary embodiments is illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter described herein. For example, elements shown as integrally formed may be constructed of multiple parts or elements, the position of elements may be reversed or otherwise varied, and the nature or number of discrete elements or positions may be altered or varied. The order or sequence of any process or method steps may be varied or re-sequenced according to alternative embodiments. Other substitutions, modifications, changes and omissions may also be made in the design, operating conditions and arrangement of the exemplary embodiments without departing from the scope of the present invention as recited in the appended claims.

## Claims

1. A photoluminescent guide (1) for an aircraft emergency lighting system, the guide (1) comprising a housing (3) and a photoluminescent insert (5) received within the housing (3), the housing (3) having a length and a width and the insert (5) being sealed within the housing (3) to extend from one end to the other end and from one side to the other side, **characterised in that** the insert (5) is an integral, one piece composite member including a base element (5a), a photoluminescent element (5b) and a cap element (5c), the cap element (5c) comprising a coloured light transmitting film, the photoluminescent element (5b) being disposed between the base element (5a) and the cap element (5c) for receiving and emitting light through the cap element (5c) and a light transmitting portion (3a) of the housing (3), and
wherein the photoluminescent element (5b) comprises a polymeric material in which photoluminescent material is suspended and the cap element (5c) comprises a film of sheet plastics.

2. The photoluminescent guide (1) of claim 1 wherein the insert (5) is flexible.

3. The photoluminescent guide (1) of claims 1 wherein the insert (5) is rigid.

4. The photoluminescent guide (1) of any preceding claim wherein the housing (3) is an extrusion or moulding.

5. The photoluminescent guide (1) of any preceding claim wherein the housing (3) has a longitudinal slot (7) open at one or both ends in which the insert (5) is received and the insert (5) is sealed within the housing (3) by closing the or each open end.

6. The photoluminescent guide (1) of any preceding claim wherein the guide (1) is straight or curved or bent.

7. An emergency lighting system for an aircraft comprising the photoluminescent guide (1) of any preceding claim configured to provide an illuminated pathway to an exit in darkness or low ambient light.

8. The emergency lighting system of claim 7 wherein the pathway includes at least one linear section consisting of one or more straight guides (1).

9. The emergency lighting system of claim 7 or claim 8 wherein the pathway includes at least one non-linear section consisting of one or more curved or bent guides (1).

10. A method of installing an emergency lighting system including:
providing a plurality of photoluminescent guides (1) in accordance with claim 1,
each guide (1) comprising a housing (3) and a photoluminescent insert (5) received within the housing(3),
the housing (3) having a length and a width, and
the insert (5) being sealed within the housing (3) to extend from one end to the other end and from one side to the other side, and
laying the guides (1) end to end to form a pathway in an aircraft cabin,
**characterised in that** the insert (5) is an integral, one piece composite member comprising a base element (5a), a photoluminescent element (5b) and a cap element (5c),
the cap element (5c) comprises a coloured light transmitting film, and
the photoluminescent element (5b) is disposed between the base element (5a) and the cap element (5c) for receiving and emitting light through the cap element (5c) and a light transmitting portion (3a) of the housing (3), and the photoluminescent element (5b) comprises a polymeric material in which photoluminescent material is suspended and the cap element (5c) comprises a film of sheet plastics.

11. The method of claim 10 wherein the pathway includes at least one linear section consisting of one or more straight guides (1) and optionally includes at least one non-linear section consisting of one or more curved or bent guides (1).

12. The method of claim 10 or claim 11 further including cutting one or more guides (1) to length and re-sealing the insert (5) within the housing (3).

## Patentansprüche

1. Fotolumineszenzführung (1) für ein Luftfahrzeugnotbeleuchtungssystem, die Führung (1) umfassend ein Gehäuse (3) und einen Fotolumineszenzeinsatz (5), der in dem Gehäuse (3) aufgenommen ist, wobei das Gehäuse (3) eine Länge und eine Breite aufweist und der Einsatz (5) innerhalb des Gehäuses (3) abgedichtet ist, um sich von einem Ende zu dem anderen Ende und von einer Seite zu der anderen Seite zu erstrecken, **dadurch gekennzeichnet, dass** der Einsatz (5) ein integrales, einstückiges Verbundglied, einschließlich eines Basiselements (5a), eines Fotolumineszenzelements (5b) und eines Deckelements (5c), ist, das Deckelement (5c) umfassend eine farbige lichtdurchlässige Schicht, wobei das Fotolumineszenzelement (5b) zwischen dem Basiselement (5a) und dem Deckelement (5c) zum Aufnehmen und Emittieren von Licht über das Deckelement (5c) und ein lichtdurchlässiges Teil (3a) des Gehäuses (3) angeordnet ist und
wobei das Fotolumineszenzelement (5b) ein polymeres Material, in dem Fotolumineszenzmaterial suspendiert ist, umfasst und das Deckelement (5c) eine Schicht aus Kunststofffolien umfasst.

2. Fotolumineszenzführung (1) nach Anspruch 1, wobei der Einsatz (5) flexibel ist.

3. Fotolumineszenzführung (1) nach Anspruch 1, wobei der Einsatz (5) starr ist.

4. Fotolumineszenzführung (1) nach einem der vorstehenden Ansprüche, wobei das Gehäuse (3) ein Strangpressling oder Formstück ist.

5. Fotolumineszenzführung (1) nach einem der vorstehenden Ansprüche, wobei das Gehäuse (3) einen Längsschlitz (7), der an einem oder beiden Enden offen ist, in dem der Einsatz (5) aufgenommen ist, aufweist und der Einsatz (5) innerhalb des Gehäuses (3) durch Schließen des oder jedes offenen Endes abgedichtet ist.

6. Fotolumineszenzführung (1) nach einem der vorstehenden Ansprüche, wobei die Führung (1) gerade oder gekrümmt oder gebogen ist.

7. Notbeleuchtungssystem für ein Luftfahrzeug, umfassend die Fotolumineszenzführung (1) nach einem der vorstehenden Ansprüche, das konfiguriert ist, um einen erleuchteten Pfad zu einem Ausgang bei Dunkelheit oder niedrigem Umgebungslicht bereitzustellen.

8. Notbeleuchtungssystem nach Anspruch 7, wobei der Pfad mindestens einen linearen Abschnitt, bestehend aus einer oder mehreren geraden Führungen (1), einschließt.

9. Notbeleuchtungssystem nach Anspruch 7 oder 8, wobei der Pfad mindestens einen nichtlinearen Abschnitt, bestehend aus einer oder mehreren gekrümmten oder gebogenen Führungen (1), einschließt.

10. Verfahren zum Installieren eines Notbeleuchtungssystems, einschließlich:
Bereitstellen einer Vielzahl von Fotolumineszenzführungen (1) nach Anspruch 1,
jede Führung (1) umfassend ein Gehäuse (3) und einen Fotolumineszenzeinsatz (5), der innerhalb des Gehäuses (3) aufgenommen ist,
wobei das Gehäuse (3) eine Länge und eine Breite aufweist und
der Einsatz (5) innerhalb des Gehäuses (3) abgedichtet ist, um sich von einem Ende zu dem anderen Ende und von einer Seite zu der anderen Seite zu erstrecken, und
durchgehendem Verlegen der Führungen (1), um einen Pfad in einer Luftfahrzeugkabine auszubilden,
**dadurch gekennzeichnet, dass** der Einsatz (5) ein integrales, einstückiges Verbundglied, umfassend ein Basiselement (5a), ein Fotolumineszenzelement (5b) und ein Deckelement (5c), ist,
das Deckelement (5c) eine farbige lichtdurchlässige Schicht umfasst und
das Fotolumineszenzelement (5b) zwischen dem Basiselement (5a) und dem Deckelement (5c) zum Aufnehmen und Emittieren von Licht über das Deckelement (5c) und ein lichtdurchlässiges Teil (3a) des Gehäuses (3) angeordnet ist und das Fotolumineszenzelement (5b) ein polymeres Material, in dem Fotolumineszenzmaterial suspendiert ist, umfasst und das Deckelement (5c) eine Schicht aus Kunststofffolien umfasst.

11. Verfahren nach Anspruch 10, wobei der Pfad mindestens einen linearen Abschnitt, bestehend aus einer oder mehreren geraden Führungen (1), einschließt und optional mindestens einen nichtlinearen Abschnitt, bestehend aus einer oder mehreren gekrümmten oder gebogenen Führungen (1), einschließt.

12. Verfahren nach Anspruch 10 oder 11, ferner umfassend ein Ablängen einer oder mehrerer Führungen (1) und ein erneutes Abdichten des Einsatzes (5) innerhalb des Gehäuses (3).

## Revendications

1. Guide photoluminescent (1) destiné à un système d'éclairage de secours d'aéronef, le guide (1) comprenant un boîtier (3) et un insert photoluminescent (5) reçu à l'intérieur du boîtier (3), le boîtier (3) ayant une longueur et une largeur et l'insert (5) étant scellé à l'intérieur du boîtier (3) pour s'étendre d'une extrémité à l'autre extrémité et d'un côté à l'autre côté, **caractérisé en ce que** l'insert (5) est un élément composite monobloc comportant un élément de base (5a), un élément photoluminescent (5b) et un élément de capuchon (5c), l'élément de capuchon (5c) comprenant un film de transmission de lumière colorée, l'élément photoluminescent (5b) étant disposé entre l'élément de base (5a) et l'élément de capuchon (5c) pour recevoir et émettre de la lumière à travers l'élément de capuchon (5c) et une partie de transmission de lumière (3a) du boîtier (3), et
dans lequel l'élément photoluminescent (5b) comprend un matériau polymère dans lequel le matériau photoluminescent est suspendu et l'élément de capuchon (5c) comprend un film de plastique en feuille.

2. Guide photoluminescent (1) selon la revendication 1, dans lequel l'insert (5) est flexible.

3. Guide photoluminescent (1) selon la revendication 1, dans lequel l'insert (5) est rigide.

4. Guide photoluminescent (1) selon l'une quelconque des revendications précédentes, dans lequel le boîtier (3) est une extrusion ou un moulage.

5. Guide photoluminescent (1) selon l'une quelconque des revendications précédentes, dans lequel le boîtier (3) a une fente longitudinale (7) ouverte à une ou deux extrémités dans lesquelles l'insert (5) est reçu et l'insert (5) est scellé à l'intérieur du boîtier (3) en fermant la ou chaque extrémité ouverte.

6. Guide photoluminescent (1) selon l'une quelconque revendication précédente, dans lequel le guide (1) est droit ou incurvé ou plié.

7. Système d'éclairage de secours pour un aéronef comprenant le guide photoluminescent (1) selon l'une quelconque revendication précédente configuré pour fournir une voie éclairée à une sortie dans l'obscurité ou une lumière ambiante faible.

8. Système d'éclairage de secours selon la revendication 7, dans lequel la voie comporte au moins une section linéaire constituée d'un ou plusieurs guides droits (1).

9. Système d'éclairage de secours selon la revendication 7 ou la revendication 8, dans lequel la voie comporte au moins une section non linéaire constituée d'un ou plusieurs guides incurvés ou pliés (1).

10. Procédé d'installation d'un système d'éclairage de secours comportant :
la fourniture d'une pluralité de guides photoluminescents (1) selon la revendication 1,
chaque guide (1) comprenant un boîtier (3) et un insert photoluminescent (5) reçu à l'intérieur du boîtier (3),
le boîtier (3) ayant une longueur et une largeur, et
l'insert (5) étant scellé à l'intérieur du boîtier (3) pour s'étendre d'une extrémité à l'autre extrémité et d'un côté à l'autre côté, et
placer les guides (1) bout à bout pour former une voie dans une cabine d'aéronef,
**caractérisé en ce que** l'insert (5) est un élément composite monobloc comprenant un élément de base (5a), un élément photoluminescent (5b) et un élément de capuchon (5c),
l'élément de capuchon (5c) comprend un film de transmission de lumière colorée, et
l'élément photoluminescent (5b) est disposé entre l'élément de base (5a) et l'élément de capuchon (5c) pour recevoir et émettre de la lumière à travers l'élément de capuchon (5c) et une partie de transmission de lumière (3a) du boîtier (3), et l'élément photoluminescent (5b) comprend un matériau polymère dans lequel le matériau photoluminescent est suspendu et l'élément de capuchon (5c) comprend un film de plastique en feuille.

11. Procédé selon la revendication 10, dans lequel la voie comporte au moins une section linéaire constituée d'un ou plusieurs guides droits (1) et comporte facultativement au moins une section non linéaire constituée d'un ou plusieurs guides incurvés ou pliés (1).

12. Procédé selon la revendication 10 ou la revendication 11, comportant en outre la découpe d'un ou de plusieurs guides (1) à la longueur et le rescellement de l'insert (5) à l'intérieur du boîtier (3).
